# EUROPÄISCHE PATENTSCHRIFT

(11) **EP 2 674 306 B1**
(45) Veröffentlichungstag und Bekanntmachung des Hinweises auf die Patenterteilung: **27.04.2016**
(21) Anmeldenummer: 13002958.0
(22) Anmeldetag: 08.06.2013
(51) Int. Cl.: B60D 1/06, B60D 1/62

(54) **Kupplungssystem mit einer Anhängekupplung und einer Anhänger-Zugkupplung**
Coupling system with a tow bar and a trailer coupling
Système d'accouplement doté d'un attelage et d'un attelage de traction

(30) Priorität: 14.06.2012 DE 102012011669
(43) Veröffentlichungstag der Anmeldung: 18.12.2013
(73) Patentinhaber: WESTFALIA - Automotive GmbH, 33378 Rheda-Wiedenbrück (DE)
(72) Erfinder: Sielhorst, Bernhard, D-33378 Rheda-Wiedenbrück (DE)
(74) Vertreter: Patentanwälte Bregenzer und Reule Partnerschaftsgesellschaft mbB

(56) Entgegenhaltungen:
- EP-A1- 2 332 750
- EP-A1- 2 415 620
- DE-A1-102010 033 641

## Beschreibung

Die Erfindung betrifft ein Kupplungssystem umfassend
- eine Anhängekupplung für ein Kraftfahrzeug und
- eine Anhänger-Zugkupplung eines Anhängers mit einer auf den Kuppelkörper aufsetzbaren Zugkupplungsaufnahme gemäß dem Oberbegriff des Anspruchs 1.

Ein derartiges Kupplungssystem ist z.B. in EP 2 332 750 A1 erläutert.

Eine Anhängekupplung eines weiteren Kupplungssystems ist in DE 10 2010 049 614 A1 beschrieben. Der Sensormitnehmer ist beispielsweise ein am Kuppelkörper drehbar gelagerter Ring, der von der Zugkupplung mitgenommen wird, wenn sich diese relativ zum Kuppelkörper, d.h. der Kupplungskugel, dreht. Somit kann eine Drehwinkel zwischen Zugfahrzeug und Anhänger ermittelt werden. Die bekannte Anhängekupplung setzt voraus, dass die Zugkupplung des Anhängers den Sensormitnehmer sozusagen klemmt, um eine Drehmitnahme zwischen der Kupplungsaufnahme und dem Sensormitnehmer herzustellen, so dass die Zugkupplung den Sensormitnehmer drehen kann. Allerdings hat es sich in der Praxis gezeigt, dass ein Schlupf zwischen der Zugkupplung und dem Sensormitnehmer auftreten kann, was zu unzuverlässigen Messergebnissen führt.

Es ist daher die Aufgabe der vorliegenden Erfindung, eine verbesserte Bewegungsmitnahme zwischen einem Sensormitnehmer, der beweglich am Kuppelkörper einer Anhängekupplung gelagert ist, und einer Zugkupplung, die am Kuppelkörper befestigbar ist, bereitzustellen.

Zur Lösung der Aufgabe ist ein Kupplungssystem gemäß der technischen Lehre des Anspruchs 1 vorgesehen.

Beispielsweise kann die Eingreifelementanordnung einen Bestandteil des Sensormitnehmers bilden, während das mindestens eine Gegeneingreifelement ein Bestandteil des Betätigungsmitnehmers bildet. Der Betätigungsmitnehmer kann jedoch auch zwei oder weitere Gegeneingreifelemente haben. Weiterhin ist es möglich, dass die umgekehrte Anordnung getroffen ist, d.h. dass die Eingreifelementanordnung einen Bestandteil des Betätigungsmitnehmers ist und am Sensormitnehmer das mindestens eine Gegeneingreifelement vorgesehen ist.

Somit ist z.B. in Drehmitnahmerichtung ein Formschluss oder ein formschlüssiger Eingriff des mindestens einen Eingreifvorsprungs in eine der Eingreifvertiefungen bzw. der mindestens einen Eingreifvertiefung mit einem Eingreifvorsprung der Reihenanordnung der Eingreifvorsprünge möglich. Man kann also z.B. auch von einem Dreh-Formschluss sprechen.

Die Erfindung betrifft also zusammenfassend ein Kupplungssystem umfassend
- eine Anhängekupplung für ein Kraftfahrzeug, insbesondere ein Personen-Kraftfahrzeug, zum Anhängen eines Anhängers an das Kraftfahrzeug, wobei die Anhängekupplung einen an einem Kuppelkörperträger angeordneten kugelförmigen Kuppelkörper aufweist, und
- eine Anhänger-Zugkupplung eines Anhängers mit einer auf den Kuppelkörper aufsetzbaren Zugkupplungsaufnahme, wobei der Kuppelkörper für die Zugkupplungsaufnahme einen diese drehbar lagernden Lagerkörper zum mehrachsig drehgelenkigen Schwenken
relativ zu dem Kuppelkörperträger bildet, wobei an dem Kuppelkörper mindestens ein Sensormitnehmer beweglich gelagert ist, der von der Anhänger-Zugkupplung mitnehmbar ist, wobei der Sensormitnehmer einen Bestandteil einer Sensoranordnung zur Erfassung einer Winkelstellung der Anhänger-Zugkupplung relativ zu dem Kuppelkörperträger bildet. Der Sensormitnehmer und ein an der Anhänger-Zugkupplung angeordneter Betätigungsmitnehmer weisen eine Eingreifelementanordnung und mindestens ein Gegeneingreifelement zum Eingriff ineinander auf, wenn der Kuppelkörper in der Zugkupplungsaufnahme aufgenommen ist.

Es ist ein Grundgedanke der vorliegenden Erfindung, dass eine sichere Drehmitnahme durch Eingreifkonturen, insbesondere ein definierter Formschluss oder Dreh-Formschluss, zwischen der Anhängekupplung und der Zugkupplung bzw. dem jeweiligen Mitnehmern hergestellt wird. Der Bediener soll allerdings nicht dadurch belastet werden, das er beim Ankuppeln der Zugkupplung an die fahrzeugseitige Anhängekupplung darauf achten muss, welche Drehwinkelstellung die Zugkupplung bezüglich der Anhängekupplung des Zugfahrzeugs hat, damit der Eingriff oder der Formschluss zwischen dem Sensormitnehmer und der Zugkupplung hergestellt werden kann. Hierfür ist es nämlich vorgesehen, dass die Paarung von Betätigungsmitnehmer und Sensormitnehmer eine Eingreifelementanordnung mit entlang einer sich entlang des Außenumfang des Kuppelkörpers oder des Innenumfangs der Kupplungsaufnahme erstreckenden Vorsprüngen oder Ausnehmungen bzw. Aufnahmen umfassen, so dass das am jeweils anderen Teil angeordnete Gegeneingreifelement, nämlich ein Eingreifvorsprung oder eine Eingreifvertiefung, einen korrespondierendes Element findet, nämlich eine Vertiefung oder einen Vorsprung entlang der sich in Umfangsrichtung erstreckenden Eingreif elementanordnung. Dabei ist es möglich, dass ein vollständiger Ring vorhanden ist, das heißt dass sich die Eingreifelementanordnung ringförmig über den kompletten Innenumfang der Zugkupplungsaufnahme oder den kompletten Außenumfang des Kuppelkörpers erstreckt. Es ist aber auch nur ein Teilumfang möglich, über den sich die Eingreifelementanordnung jeweils erstreckt.

Zwischen den Vertiefungen oder den Vorsprüngen der Reihenanordnung von Eingreifvertiefungen oder Eingreifvorsprüngen können auch Bereiche des Sensormitnehmers oder des Betätigungsmitnehmers ohne Eingreifvertiefungen oder Eingreifvorsprüngen vorgesehen sein.

Eine bevorzugte Maßnahme sieht vor, dass die Reihenanordnung der Eingreifvertiefungen oder der Eingreifvorsprünge und der zugeordnete Eingreifvorsprung oder die zugeordnete Eingreifvertiefung am anderen Teil von Anhängekupplung oder Zugkupplung so getroffen sind, dass nur jeweils ein Paar quer zur Betätigungsrichtung des Sensormitnehmers verlaufende Seitenflanken des Sensormitnehmers und des Betätigungsmitnehmer in Berührkontakt ist. Diese Maßnahme trägt nämlich dazu bei, dass zwischen dem Betätigungsmitnehmer und dem Sensormitnehmer keine Verspannung auftritt, wenn sich der Anhänger nicht nur um eine Drehachse des Sensormitnehmers am Kuppelkörper dreht, sondern auch quer dazu, beispielsweise beim Überfahren einer Kuppe, wenn sich das Gespann zwischen Zugfahrzeug und Anhänger verschränkt oder dergleichen. Mithin sind also nur zwei Seitenflanken der Paarung aus Eingreifvertiefung und Eingreifvorsprung in Berührkontakt, während die anderen Seitenflanken zweckmäßigerweise frei stehen. Dabei ist die Anordnung zweckmäßigerweise so getroffen, dass stets mindestens ein Paar Seitenflanken von Sensormitnehmer und Betätigungsmitnehmer in Berührkontakt sind, so dass dauerhaft und kontinuierlich eine Betätigungsmitnahme gewährleistet ist. Der Betätigungsmitnehmer nimmt also den Sensormitnehmer stets mit, so dass eine Winkelerfassung dauerhaft und kontinuierlich möglich ist.

Ein an sich eigenständiger Aspekt der Erfindung sieht vor, dass die Eingreifelementanordnung und das mindestens eine Gegeneingreifelement einander zugeordnete Eingreifkonturen aufweisen, die eine zuverlässige Drehmitnahme des Sensormitnehmers bezüglich der Achse, in der er drehbar bezüglich des Kuppelkörpers gelagert ist, gewährleisten, andererseits sicherstellen, dass eine Verdrehung der Zugkupplung relativ zum Kuppelkörper um eine weitere oder mehrere weitere Achsen den Sensormitnehmer nicht oder nur allenfalls unwesentlich beeinflussen oder betätigen.

Vorteilhaft ist vorgesehen, dass die Anhänger-Zugkupplung relativ zum Kuppelkörper um eine erste und mindestens eine zu der ersten Achse winkeligen zweite Achse verdrehbar ist und der mindestens eine Sensormitnehmer zur Erfassung der Relativ-Verdrehung um die erste Achse vorgesehen ist, und dass die Eingreifelementanordnung und das mindestens eine Gegeneingreifelement einander zugeordnete Eingreifkonturen haben, die so beschaffen sind, dass eine Stellung des mindestens einen Sensormitnehmers bezüglich der ersten Achse bei einer Relativ-Verdrehung der Anhänger-Zugkupplung relativ zum Kuppelkörper um ausschließlich die mindestens eine zweite Achse zumindest im wesentlichen unverändert bleibt und/oder bei einer Relativ-Verdrehung der Anhänger-Zugkupplung relativ zum Kuppelkörper, die eine Verdrehung um eine erste Bewegungskomponente um die erste Achse und eine Verdrehung um eine zweite Bewegungskomponente um die mindestens eine zweite Achse umfasst, der mindestens eine Sensormitnehmer um die erste Bewegungskomponente verstellt wird, während die zweite Bewegungskomponente keine oder nur eine unnwesentliche Auswirkung auf den mindestens einen Sensormitnehmer hat.

Die erste Achse ist beispielsweise die Z-Achse, zum Beispiel eine Hochachse, während die zweite Achse die x-Achse und/oder die Y-Achse umfasst. Wenn also die Zugkupplung relativ zum Kuppelkörper beispielsweise um die X-Achse und/oder die Y-Achse verstellt wird, jedoch nicht um die Z-Achse, wirkt sich dies auf den die Drehbewegung bezüglich der Z-Achse erfassenden Sensormitnehmer nicht aus, d.h. der Sensormitnehmer bleibt quasi bezüglich der Z-Achse stehen. Wenn eine Bewegung des Betätigungsmitnehmers relativ zum Sensormitnehmer beispielsweise eine überlagerte Bewegung um die Z-Achse und die Y-Achse und/oder die X-Achse ist, d.h. eine erste, auf die Z-Achse-bezogene Bewegungskomponente und eine zweite auf eine oder beide der anderen Achsen, der X-und/oder der Y-Achse, bezogene Bewegungskomponente umfasst, wirkt sich nur die erste Bewegungskomponente auf den Sensormitnehmer aus, so dass dieser zuverlässig die Relativ-Verdrehung um die Z-Achse erfasst, hinsichtlich der mindestens einen zweiten Achse (X- und/oder Y-Achse) im wesentlichen unbeeinflusst bleibt.

Das Obige kann man ohne weiteres beispielsweise durch die später in den Ausführungsbeispielen noch erläuterten Ausführungsformen erzielen, zum Beispiel durch gekrümmte Verläufe der Eingreifkonturen, bogenförmige Verläufe der Eingreifkonturen oder dergleichen.

Der Sensormitnehmer ist zweckmäßigerweise ringförmig und drehbar am Kuppelkörper gelagert. Zweckmäßigerweise erstreckt sich der Sensormitnehmer etwas oberhalb oder unterhalb eines Äquators des Kuppelkörpers, so dass der größte Umfang des Kuppelkörpers (der Äquator) von der Zugkupplung umschlossen wird.

Auch der Betätigungsmitnehmer kann ringförmig sein, beispielsweise sich am Innenumfang der Zugkupplung bzw. der Kupplungsaufnahme desselben erstrecken.

Der Sensormitnehmer oder der Betätigungsmitnehmer umfasst zweckmäßigerweise eine Zahnanordnung, die nach radial außen vor den Kuppelkörper bzw. nach radial innen in die Zugkupplungsaufnahme hinein vorstehende Zähne oder Dorne umfasst. Die Reihenanordnung von Eingreifelementen wird also beispielsweise durch Zähne oder Dorne gebildet. Selbstverständlich können solche Zähne beim Sensormitnehmer, aber auch bei Betätigungsmitnehmer vorgesehen sein.

Eine in der Zeichnung hauptsächlich behandelte Ausführungsform sieht vor, dass der Sensormitnehmer die Reihenanordnung von Zähnen umfasst, während der Betätigungsmitnehmer nur einen einzigen Vorsprung umfasst, der in einen Zwischenraum zwischen den Zähnen eingreift. Es versteht sich, dass diese Ausführungsform auch umgekehrt getroffen sein kann, so dass am Sensormitnehmer ein einzelner Zahn vorhanden ist, der in eine Vertiefung an der einen Bestandteil des Betätigungsmitnehmers bildenden Eingreifelementanordnung eingreift.

Ein anderes Ausführungsbeispiel sieht vor, dass der Betätigungsmitnehmer (oder der Sensormitnehmer) zwei Gegeneingreifelemente aufweist, die in einem Drehwinkelabstand zueinander angeordnet sind und mit ebenfalls drehwinkelversetzten Zähnen des Sensormitnehmers (oder des Betätigungsmitnehmers) in Berührkontakt stehen. Allerdings ist es bevorzugt, wenn nicht beide Gegeneingreifelemente gleichzeitig in Berührkontakt einem einzelnen Zahn sind, sondern nur jeweils ein Gegeneingreifelement des Betätigungsmitnehmers mit voneinander verschiedenen Seitenflanken.

Erfindungsgemäß ist mindestens ein Eingreifelement, z.B. das mindestens eine Gegeneingreifelement oder die Eingreifelementanordnung, des Betätigungsmitnehmers an der Anhänger-Zugkupplung verstellbar zwischen einer Eingreifstellung und einer außer Eingreifstellung gelagert. In der Eingreifstellung greift das Eingreifelement des Betätigungsmitnehmers in den Sensormitnehmer ein, während in der Außereingriffstellung das Eingreifelement außer Eingriff mit dem Sensormitnehmer ist. Der Betätigungsmitnehmer ist vorzugsweise bezüglich der Drehachse, um die er den Sensormitnehmer dreh-mitnehmen soll, oder der Drehmitnahmerichtung, in der er den Sensormitnehmer mitnehmen soll, drehfest an der Zugkupplung befestigt oder festlegbar, beispielsweise mittels eines Riegelelements oder dergleichen.

Mindestens ein Eingreifelement, z.B. die Eingreifelementanordnung oder das mindestens eine Gegeneingreifelement, des Betätigungsmitnehmers ist zweckmäßigerweise an einer Verschlussbacke der Anhänger-Zugkupplung zum Verschließen der Zugkupplung bezüglich der Anhängekupplung des Kraftfahrzeugs angeordnet. Wenn also die Zugkupplung ver- oder geschlossen wird, die Verschlussbacke also in die Schließstellung verstellt wird, wird gleichzeitig das Eingreifelement in Eingriff mit dem Sensormitnehmer gebracht.

Eine Ausführungsform kann dabei vorsehen, dass die Verschlussbacke sozusagen den Betätigungsmitnehmer bildet. Beispielsweise kann die Verschlussbacke als Eingreifelement ausgestaltet sein oder dieses integral aufweisen. Eine andere Ausführungsform sieht vor, dass mindestens ein Eingreifelement des Betätigungsmitnehmers einen an der Schließbacke lösbar angeordneten Betätigungskörper umfasst, beispielsweise eine Art Überzug für die Schließbacke.

In beiden Fällen ist eine einfachere Nachrüstung bekannter Zugkugel-Kupplungen möglich, beispielsweise indem an die an sich schon vorhandene Schließbacke der Überzug, beispielsweise in Gestalt eines Steckteils, angebracht wird. Aber auch eine einzig vorhandene Schließbacke kann ohne weiteres gegen eine erfindungsgemäß ausgestalteten Schließbacke ausgetauscht werden.

Das mindestens eine Eingreifelement oder mindestens ein Eingreifelement, z.B. die Eingreifelementanordnung oder das mindestens eine Gegeneingreifelement, des Betätigungsmitnehmers kann zweckmäßigerweise zum Verstellen zwischen der Eingreifstellung und der Außereingriffstellung auch an einem Stellelement angeordnet sein, beispielsweise einem Schieber, im Drehglied oder dergleichen. Das Stellelement ist zweckmäßigerweise unabhängig von einem Schließmechanismus der Zugkupplung beweglich. Somit kann also beispielsweise zunächst die Zugkupplung geschlossen werden und anschließend das Stellelement mit dem Eingreifelement in Richtung der Eingreifstellung verstellt werden. Zweckmäßig ist aber auch eine Bewegungskopplung mit dem Schließmechanismus, derart, dass beispielsweise beim Schließen des Schließmechanismusses zugleich das Stellelement mit dem Eingreifelement des Betätigungsmitnehmers in Eingriff mit dem Sensormitnehmer gebracht wird und sinngemäß umgekehrt das Eingreifelement außer Eingriff mit dem Sensormitnehmer gebracht wird, wenn der Schließmechanismus geöffnet wird.

Das mindestens eine Eingreifelement, insbesondere das mindestens eine Gegeneingreifelement oder die Eingreifelementanordnung, des Betätigungsmitnehmers hat zweckmäßigerweise an seiner dem Kuppelkörper zugeordneten Seite eine runde, mit der kugelförmigen Außenkontur des Kuppelkörpers korrespondierende Kontur. Der Betätigungsmitnehmer ist auf diesem Wege zweckmäßigerweise entlang der Außenkontur des Kuppelkörpers quer zu dessen Äquatoriallinie frei schwenkbar, bleibt aber dennoch in insbesondere formschlüssigem Eingriff mit dem jeweils zugeordneten Eingreifelement des Sensormitnehmers.

Das mindestens eine Gegeneingreifelement hat zweckmäßigerweise eine scheibenförmige oder plattenförmige Gestalt. Die Schmalseite dieser Scheibe der Gegeneingreifelemente oder des Gegeneingreifelement ist der Außenkontur des Kuppelkörpers zugewandt.

Der Betätigungsmitnehmer umfasst zweckmäßigerweise genau ein einziges Gegeneingreifelement, insbesondere das vorgenannte scheibenförmige Gegeneingreifelement.

Der Betätigungsmitnehmer hat zweckmäßigerweise zwei Gegeneingreifelemente, die in einem Winkelabstand zueinander an der Zugkupplungsaufnahme angeordnet sind. Nur jeweils eines der Gegeneingreifelemente des Betätigungsmitnehmers ist jedoch zweckmäßigerweise bezüglich einer Betätigungsrichtung des Sensormitnehmers in Kontakt mit dem Sensormitnehmer. Auch das führt dazu, dass zwar stets ein Berührkontakt bzw. eine Mitnahme zwischen Sensormitnehmer und Betätigungsmitnehmer vorhanden ist, jedoch keine Verspannung auftritt, wenn sich das Gespann bestehend aus Zugfahrzeug und Anhänger über eine Kuppe bewegt oder dergleichen. Die freie Stirnwand oder Stirnseite des Gegeneingreifelements ist also beispielsweise konvex.

Es versteht sich, dass diese Maßnahme auch bei dem Sensormitnehmer vorteilhaft ist, wobei dieser dann an seinem Außenumfang, der der Zugkupplungsaufnahme zugeordnet ist oder zugewandt ist, eine entsprechend gerundete Kontur aufweist, die mit dem Innenumfang Zugkupplungsaufnahme korrespondiert und ein freies Drehen der Zugkupplungsaufnahme relativ zum Kuppelkörper ermöglicht.

Mindestens eine Eingreifvertiefung des Betätigungsmitnehmers oder des Sensormitnehmers, z.B. an der Eingreifelementanordnung oder dem mindestens einen Gegeneingreifelement, weist zweckmäßigerweise eine Nut auf, wobei die Nut gekrümmt oder verlaufende Seitenwände aufweist, die zu den jeweiligen freien Enden der Nut hin weiter voneinander beabstandet sind als in einem mittleren Abschnitt der Nut. Die Nut hat also z.B. zueinander hin orientierte konvexe Seitenwände, wobei die freien Enden der Seitenwände einen größeren Abstand zueinander haben als ein mittlerer Abschnitt.

Die Eingreifelementanordnung und/oder das mindestens eine Gegeneingreifelement, z.B. der mindestens eine Eingreifvorsprung oder eine Reihenanordnung von Eingreifvorsprüngen und/oder mindestens eine Eingreifvertiefung, umfassen zweckmäßigerweise mindestens eine sphärische Zweieck-Kontur. Zum Beispiel ist eine Abwicklung sphärischer Zweieck-Konturen vorgesehen, die sich über einen Außenumfang des Kuppelkörpers oder einen Innenumfang der Kupplungsaufnahme erstreckt. Besonders bevorzugt ist es, wenn eine Reihenanordnung derartiger Zweieck-Konturen zur Bildung von Eingreifvertiefungen mit einem komplementären, eine Zweieck-Kontur aufweisenden Eingreifvorsprung zusammenwirkt - wobei der Eingreifvorsprung auch eine andere Geometrie aufweisen kann.

Ein Vorteil dieser Anordnung ist z.B. , dass die Eingreifkonturen leicht ineinander hinein gelangen können, um eine Bewegungsmitnahme zwischen Sensormitnehmer und Betätigungsmitnehmer herzustellen.

Beispielsweise können derartige Zweieck-Konturen magnetisch und/oder optisch erfasst werden, umso eine Winkelstellung zwischen Anhänger und Zugfahrzeug zu erfassen.

Weiterhin ist es zweckmäßig, wenn auch anderweitig gekrümmte oder elliptische Verläufe einer jeweiligen Eingreifkontur vorgesehen sind. Beispielsweise können eine oder bei von einander zugeordneten Eingreifkonturen einen elliptischen, gekrümmten oder bogenförmigen Verlauf aufweisen. Es versteht sich, dass es ausreicht, wenn nur eine der Eingreifkonturen so ausgestaltet ist. Die andere Eingreifkontur kann auch einen Krümmungsverlauf haben, aber auch z.B. eine ballige Kontur. Möglich ist zum Beispiel, dass die eine Eingreifkontur einen relativ großen Krümmungsradius aufweist, während die andere Eingreifkontur einen sehr kleinen Krümmungsradius aufweist, so dass mehr oder minder ein punktueller Kontakt zwischen den beiden Eingreifkonturen vorhanden ist.

An dieser Stelle sei bemerkt, dass es selbstverständlich vorteilhaft ist, wenn Eingreifvorsprünge und/oder Eingreifvertiefungen mit Einführschrägen versehen sind, so dass sie leicht in Eingriff miteinander bringbar sind.

Eine Ausführungsform der Erfindung sieht vor, dass der Sensormitnehmer als ein Geber für einen ortsfest, beispielsweise am Kuppelkörperträger oder am Kuppelkörper angeordneten Sensor dient. Die andere, ebenfalls möglich Ausführungsform betrifft einen beispielsweise ortsfest am Kuppelkörperträger oder Kuppelkörper angeordneten Sensor-Geber, während der Sensor selbst am Sensormitnehmer angeordnet ist. Selbstverständlich können jeweils mehrere Sensorgeber und/oder mehrere Sensoren vorgesehen sein.

Beispielsweise ist mindestens ein Sensor, zum Beispiel ein optischer Sensor, ein induktiver oder magnetischer Sensor oder dergleichen ortsfest am Kuppelkörper, beispielsweise in einer Sensoraufnahme, angeordnet, während einer oder mehrere Geber an dem Sensormitnehmer angeordnet sind. Es ist aber prinzipiell auch möglich, dass beispielsweise ein Sensor am Sensormitnehmer angeordnet ist, der von einem ortsfest am Kuppelkörper, zum Beispiel in der Sensoraufnahme, angeordneten Geber betätigbar ist. Bei dem Geber handelt es sich beispielsweise um eine Lichtquelle, einen Magneten, oder dergleichen.

Die Sensoranordnung weist vorteilhaft mindestens eine Lichtquelle mit einem zum Sensormitnehmer gerichteten Licht-Austrittsbereich zur Erzeugung von durch den Sensormitnehmer reflektierbarem Licht auf. Ein Licht-Erfassungsbereich des mindestens einen optischen Sensors ist zur Erfassung des reflektierten Lichts ausgerichtet. Die Sensoranordnung weist vorteilhaft Signalmittel zur Erzeugung eines eine Winkelstellung des Sensormitnehmers relativ zu dem Kuppelkörperträger anzeigenden Winkelsignals anhand eines Messsignals auf, das von dem mindestens einen optischen Sensor anhand von durch den Sensormitnehmer reflektiertem Licht erzeugbar ist. Es ist auch möglich, dass der Sensormitnehmer einen optischen Geber, z.B. eine Reflektionsmarkierung, einen Strichcode oder dergleichen aufweist, mit der der Sensor, in diesem Fall ein optischer Sensor, zusammenwirkt.

Bevorzugt ist ein magnetisches Prinzip, d.h. der Sensor umfasst einen oder mehrere Sensorkomponenten, die magnetisch aktivierbar sind. Beispielsweise handelt es sich bei dem Sensor um einen magnetisch resistiven Sensor, insbesondere einen GMR- oder AMR-Sensor. Es versteht sich, dass die Erfindung nicht auf magnetische Sensoren beschränkt ist, d.h. dass beispielsweise auch optische Sensoren möglich sind, was später noch deutlich wird.

In Zusammenwirkung mit dem magnetischen Sensor und der magnetischen Sensoranordnung weist der Sensormitnehmer zweckmäßigerweise eine Magnetanordnung mit einem oder mehreren Magneten auf. Wenn mehrere Magnete vorhanden sind, sind ihre Pole zweckmäßigerweise in Umfangsrichtung des Sensormitnehmers zueinander beabstandet. Beispielsweise sind mehrere Magnete, insbesondere zwei oder mehr Magnete, in Umfangsrichtung hintereinander angeordnet, wobei die Polarität der Magnete zweckmäßigerweise gleich orientiert ist, d.h. dass ein Südpol des einen Magneten neben einem Nordpol des benachbarten Magneten angeordnet ist. Es versteht sich, dass jedoch auch eine umgekehrte Magnetisierung möglich ist, d.h. dass einander gegenüberliegende Südpole oder Nordpole vorgesehen sind. Weiterhin ist es denkbar, einen ringförmigen Magneten vorzusehen.

Der Sensormitnehmer weist zweckmäßigerweise mindestens eine Aufnahme, insbesondere eine Tasche, zur Aufnahme des mindestens einen Gebers zur Betätigung des mindestens Sensors, insbesondere zur Aufnahme eines Magneten, und/oder zur Aufnahme mindestens eines Sensors aufweist. Die mindestens eine Aufnahme ist vorteilhaft als eine Steckaufnahme zum Einstecken des mindestens einen Gebers oder Sensors ausgestaltet und/oder weist zweckmäßigerweise Rastmittel zum Verrasten des mindestens einen Gebers oder Sensors auf.

Des Weiteren kann der Sensormitnehmer auch aus einem magnetischen Kunststoffmaterial bestehen oder einem magnetisierbaren Kunststoffmaterial. Die Magnetisierung des Sensormitnehmers kann beispielsweise anhand von magnetischem Material, z.B. Metallsplittern, seltenen Erden oderdergleichen, erfolgen.

Bevorzugt besteht der Sensormitnehmer oder eine Komponente des Sensormitnehmers ganz oder im Wesentlichen aus einem thermoplastischen Polyurethan (PU), insbesondere mit vernetzter Struktur (TPUX). Vorteilhaft ist jedenfalls ein elastisches Kunststoffmaterial.

Die Sensoranordnung weist - unabhängig davon, ob sie einen magnetischen, optischen oder auf einem sonstigen Messprinzip arbeitenden Sensor aufweist - zweckmäßigerweise Signalmittel zur Erzeugung eines eine Winkelstellung des Sensormitnehmers relativ zu dem Kuppelkörperträger anzeigenden Winkelsignals anhand eines Messsignals auf, das von dem mindestens einen beispielsweise optischen oder magentischen Sensor anhand durch den Sensormitnehmer erzeugten Signalen, z.B. reflektiertem Licht, Magnetfeldänderungen oder dergleichen, erzeugbar ist.

Die Signalmittel sind zweckmäßigerweise zur Berechnung von Koordinatendaten, beispielsweise Winkel-Koordinatendaten, anhand von Geschwindigkeitsdaten des mindestens einen Sensors ausgestaltet. Der Sensor misst also eine Winkeländerung des Sensormitnehmers relativ zum Kuppelkörper, um anhand dieses Geschwindigkeitssignals wiederum Winkel-Koordinatendaten zu ermitteln.

Die Sensoranordnung weist zweckmäßigerweise eine Auswerteeinrichtung zur Auswertung eines Sensorsignals des Sensors auf, beispielsweise zur Bildung eines Winkelsignals oder dergleichen.

Auch eine optische und/oder akustische, zum Beispiel am Kuppelkörperträger angeordnete, Anzeigeeinrichtung zur Anzeige des Sensorsignals oder eines Winkelsignals ist bei der Sensoranordnung vorteilhaft.

Weiterhin ist es vorteilhaft, wenn die Sensoranordnung eine Busschnittstelle oder eine sonstige elektrische Schnittstelle zur Ankopplung an das Bordnetz des Kraftfahrzeugs zur Übertragung des Winkelsignals aufweist. Die Busschnittstelle ist beispielsweise eine CAN-Schnittstelle (Controller Area Network), eine LIN-Schnittstelle (Local Interconnect Network) oder dergleichen.

Der mindestens eine Sensor - es können auch mehrere Sensoren vorgesehen sein - ist vorteilhaft in der Sensoraufnahme des Kuppelkörpers angeordnet. In der Sensoraufnahme des Kuppelkörpers könnte aber auch ein Geber zur Betätigung eines oder mehrerer in dem Sensormitnehmer angeordneten Sensoren angeordnet sein. Von der Sensoraufnahme führt beispielsweise ein Anschlusskanal und oder ein Montagekanal beispielsweise zu einer Auswerte Einrichtung zur Auswertung von Sensorsignalen des mindestens einen Sensors. Selbstverständlich könnte auch eine drahtlose Übertragung zwischen Sensor und Auswerteeinrichtung vorgesehen sein. Weiterhin ist es denkbar, dass der Sensor eine Auswerte Einrichtung aufweist und diese beispielsweise mit dem Bordnetz des Kraftfahrzeugs direkt, drahtlos, zum Beispiel über Funk, oder auch leitungsgebunden, kommuniziert.

An dieser Stelle sei bemerkt, dass der Kuppelkörperträger abnehmbar, insbesondere steckbar, oder fest am Kraftfahrzeug montiert sein kann oder auch an einem Lager dergestalt, dass der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Kraftfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Kraftfahrzeug vor, beispielsweise nach hinten vor einen Stoßfänger, so dass der Anhänger angehängt werden kann.

Nachfolgend werden Ausführungsbeispiele der Erfindung anhand der Zeichnung erläutert. Es zeigen:
- Figur 1: ein erstes Kupplungssystem mit einer Anhängekupplung und einer Zugkupplung in der Seitenansicht,
- Figur 2: eine perspektivische Schrägansicht eines Kuppelkörpers sowie eines Betätigungsmitnehmers des Kupplungssystems gemäß Figur 1,

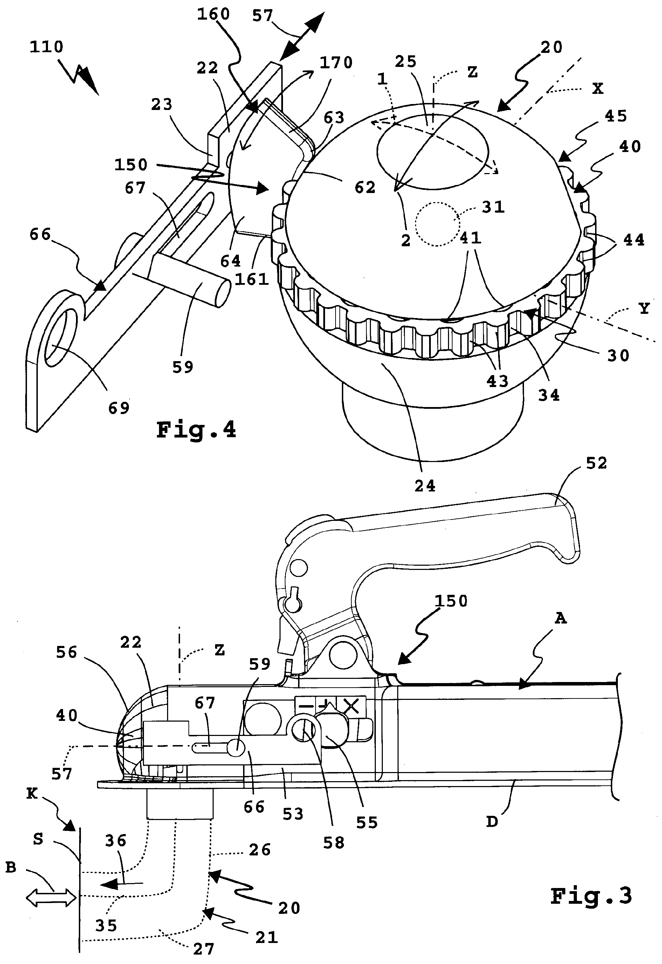

- Figur 3: ein zweites Kupplungssystems mit einer Anhängekupplung und einer Zugkupplung in Seitenansicht,
- Figur 4: eine perspektivische Schrägansicht eines Kuppelkörpers sowie eines Betätigungsmitnehmers des Kupplungssystems gemäß Figur 3,

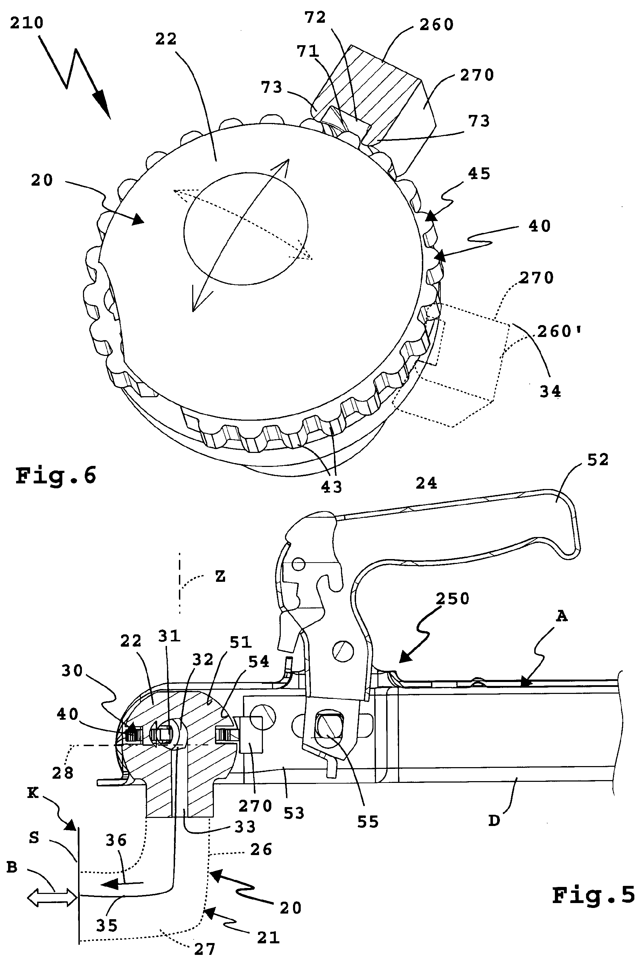

- Figur 5: eine Querschnittsansicht eines dritten Kupplungssystems mit einer Anhängekupplung und einer Zugkupplung etwa entlang einer Schnittlinie H-H in Figur 7,
- Figur 6: eine perspektivische Schrägansicht eines Kuppelkörpers sowie eines Betätigungsmitnehmers des Kupplungssystems gemäß Figur 5,
- Figur 7: eine Draufsicht von oben auf die Zugkupplung des Kupplungssystems gemäß Figur 3,
- Figur 8: eine Ansicht auf einen Sensormitnehmer und den Betätigungsmitnehmer des Kupplungssystems gemäß Figuren 5 und 6,

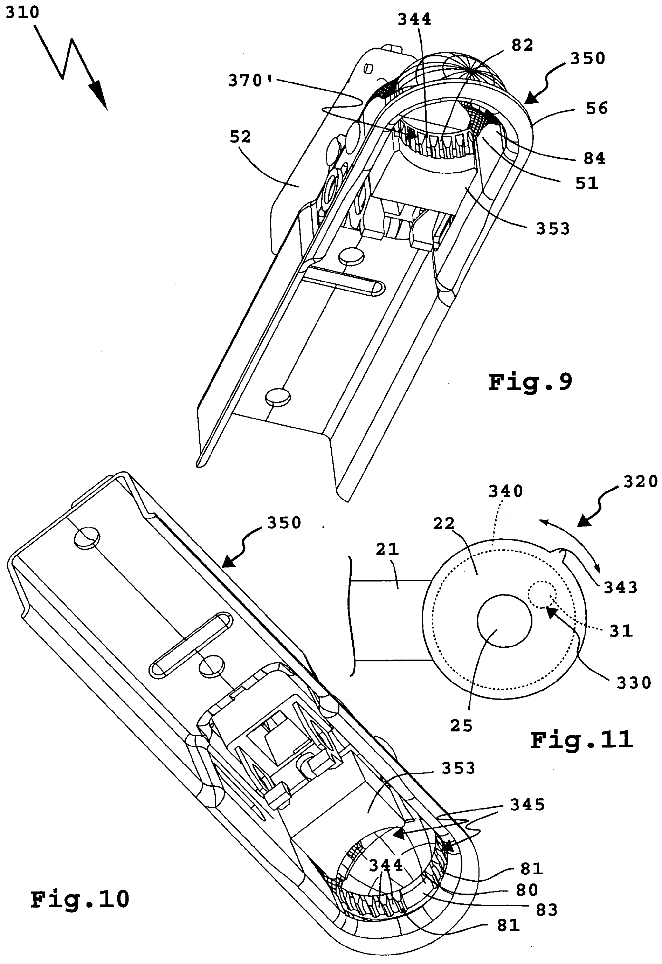

- Figur 9: eine Schrägansicht von unten vorn und
- Figur 10: eine Schrägansicht von unten hinten auf eine Zugkupplung eines vierten Kupplungssystems, von dem in
- Figur 11: eine Anhängekupplung schematisch von oben dargestellt ist, und
- Figur 12: eine schematische Darstellung eines weiteren Ausführungsbeispiels, bei dem ein Sensormitnehmer sphärische Zweieck-Konturen aufweist, in die ein entsprechend ausgestalteter Betätigungsmitnehmer der Anhänger-Zugkupplung eingreift.

In der Zeichnung sind Kupplungssysteme 10, 110, 210 und 310 dargestellt, die teilweise gleiche oder ähnliche Komponenten aufweisen, die dementsprechend mit denselben Bezugsziffern versehen sind. Insoweit sich die Komponenten unterscheiden, sind sich um 100 unterscheidende Bezugsziffern gewählt.

Die Kupplungssysteme 10, 110, 210 umfassen eine Anhängekupplung 20, die an einem Kraftfahrzeug K befestigt ist, beispielsweise einem Querträger, sowie jeweils eine Zugkupplung 50, 150, 250. Das Kupplungssystem 310 umfasst eine Anhängekupplung 320 und eine Zugkupplung 350.

Ein Kuppelkörperträger 21 der Anhängekupplung 20, 320 ist an dem Querträger z.B. mittels Schrauben etc. starr oder z.B. mittels einer Steckverbindung lösbar befestigt, wobei eine bewegliche Lagerung, insbesondere eine Dreh- und/oder Schiebelagerung, des Kuppelkörperträgers 21 bezüglich des Kraftfahrzeugs K auch möglich ist, z.B. anhand einer geeigneten Lagereinrichtung. Der Kuppelkörperträger 21 steht nach hinten vor einen Stoßfänger S des Kraftfahrzeuges K vor. Der Kuppelkörperträger 21 trägt an seinem freien Ende einen Kuppelkörper 22, der vorliegend eine kugelige Gestalt hat. Dementsprechend kann eine Anhänger-Zugkupplung 50, 150, 250, 350 eines Anhängers A mit ihrer Zugkupplungsaufnahme 51 auf den kugeligen Kuppelkörper 22 aufgesetzt werden.

Die Anhänger-Zugkupplung 50, 150, 250, 350 ist an einem freien Ende einer Deichsel D des Anhängers A angeordnet und mittels eines Schwenkhebels 52 betätigbar. Wenn der an um eine Schwenkachse 55 schwenkbar gelagerte Schwenkhebel 52 in die Schließstellung, das heißt in Richtung der Deichsel D bewegt wird, betätigt er in an sich bekannter Weise einen Verschlussbacken 53 in Richtung einer kugeligen Außenoberfläche 23 des Kuppelkörpers 22. Somit liegt also eine Innenfläche 54 der Zugkupplungsaufnahme 51 an der kugeligen Außenoberfläche 23 an. Der Kuppelkörper 22 ist zweckmäßigerweise feststehend bezüglich des Kuppelkörperträgers 21, zumindest drehfest, so dass die Zugkupplungsaufnahme 51 an der kugeligen Außenoberfläche 23 in bekannter Weise außenseitig entlang gleitet.

Die vorliegende Ausgestaltung des Kuppelkörpers 22 als Kupplungskugel, die bevorzugt ist, ermöglicht die Ankupplung einer üblichen, an sich normgerechten Zugkugelkupplung an die erfindungsgemäße Anhängekupplung 20, vorliegend also der Zugkupplung 50, 150, 250, 350. Diese ist dementsprechend eine Zugkugelkupplung.

Der Kuppelkörper 22 hat an seiner Oberseite eine Abflachung 25. Der Kuppelkörperträger 21 weist einen Halsabschnitt 26 auf, auf dem der Kuppelkörper 22 angeordnet ist. Der Halsabschnitt 26 befindet sich an einem freien Endbereich eines Armabschnitts 27 des Kuppelkörperträgers 21.

Der Armabschnitt 27, der Halsabschnitt 26 und der Kuppelkörper 22 sind zweckmäßigerweise einstückig, so dass insgesamt die Anhängekupplung 20 eine hohe Belastbarkeit aufweist. Es können typische Werkstoffe für Kugelstangen verwendet werden, wobei selbstverständlich auch höherwertige Materialien, z.B. C45, 42CrMo4 oder dergleichen, zwar möglich sind, jedoch nicht unbedingt notwendig. Ferner besteht die Möglichkeit, den Kuppelkörper 22 und den Kuppelkörperträger 21 auch mehrteilig auszuführen, beispielsweise als zwei voneinander an sich zunächst separate, jedoch fest miteinander verbundene Komponenten. Die jeweiligen Bestandteile der Anhängekupplung 20 können beispielsweise miteinander verschweißt, verklebt oder verschraubt sein, wobei die vorliegende einstückige Bauweise bevorzugt ist. Diese einstückige oder fest miteinander zusammengefügte Bauweise der Komponenten der Anhängekupplung 20 bzw. deren Kupplungsarm ist ohne Weiteres realisierbar, auch wenn die nachfolgend beschriebene Sensoranordnung 30 zum Einsatz kommt, mit der Winkelstellungen des Anhängers A relativ zur Anhängekupplung 20 und somit zum Kraftfahrzeug K ermittelbar sind.

Die Sensoranordnung 30 umfasst einen Sensor 31, beispielsweise einen magnetischen Sensor, der in einer Sensoraufnahme 32 direkt am Kuppelkörper 22 angeordnet ist. Von der Sensoraufnahme 32 führt z.B. ein Kanal 33 zum Kuppelkörperträger 21, in dem z.B. eine Leitung 35 vom Sensor 31 zu einem Bordnetz B des Kraftfahrzeugs K verlegt sein kann. Über die Leitung 35 überträgt der Sensor 31 z.B. eine Winkelstellung des Anhängers A zum Kraftfahrzeug K repräsentierende Winkelsignale 36 an das Bordnetz B. Eine drahtlose Übertragung der Winkelsignale 36, z.B. über Funk oder Infrarot, ist aber auch möglich.

Die Sensoraufnahme 32 und somit der Sensor 31 befinden sich in einem äquatorialen Bereich des Kuppelkörpers 22. Der Sensor 31 ist beispielsweise an einer Platine angeordnet, die weitere Komponenten enthalten kann, beispielsweise einen Filter zur Ausfilterung von unplausiblen Spitzenwerten, einen Verstärker zu Verstärkung eines Sensorsignals, das der Sensor 31 erzeugt, oder dergleichen. Selbstverständlich können diese Funktionen auch unmittelbar in den Sensor 31 integriert sein, insbesondere dann, wenn dieser als ein ASIC, ausgebildet ist.

Jedenfalls befindet sich der Sensor 31 vorteilhaft vor Ort dort, wo die Winkelmessung tatsächlich stattfinden soll.

Am Kuppelkörper 22, ebenfalls im Bereich der Äquatoriallinie 28, vorzugsweise knapp oberhalb der Äquatoriallinie 28, befindet sich weiterhin ein Sensormitnehmer 40, der in einer Lageraufnahme 34 des Kuppelkörpers 22 drehbar gelagert ist. Der Sensormitnehmer 40 ist ringförmig, d.h. er ist als ein Ring ausgestaltet. In dem Sensormitnehmer 40 sind Magnete 41 aufgenommen, deren Magnetfeld den Sensor 31 erregt bzw. beaufschlagt. Ändert sich nunmehr die Winkelposition der Magnete 41 relativ zum Sensor 31, erzeugt dieser ein Winkelsignal, das die Winkelstellung des Sensormitnehmers 40 relativ zum Sensor 31 repräsentiert. Da der Sensor 31 bezüglich des Kuppelkörpers 22 ortsfest ist, signalisiert und identifiziert das Winkelsignal, das der Sensor 31 erzeugt, zugleich eine Winkelstellung des Sensormitnehmers 40 relativ zum Kuppelkörper 22.

Der Sensormitnehmer 40 hat von einem Ringkörper 42 nach radial außen vorstehende Eingreifvorsprünge 43, die in der Art von Zähnen ausgestaltet sind, so dass sich zwischen den Eingreifvorsprüngen 43 Eingreifvertiefungen 44 ergeben, in die eine Gegenkontur eingreifen kann. Der Sensormitnehmer 40 weist also eine Eingreifelementanordnung 45 auf, deren Eingreifvertiefungen 44 bzw. Eingreifvorsprünge 43 sich über einen Außenumfang 24 des Kuppelkörpers 22 erstrecken.

Die Magnete 41 sind in Taschen oder Vertiefungen des Ringkörpers 42 aufgenommen. Der Ringkörper 42 kann mir Lage sein, beispielsweise einen radial innenliegenden Grundkörper umfassen, an dem radial außen quasi ein zum Verschleiß bereitstehender Mitnehmerkörper mit den Eingreifvorsprüngen 43 bzw. den Eingreifvertiefungen 44 lösbar angeordnet ist, beispielsweise mit dem Ringkörper 42 verklebt, verrastet oder dergleichen. Jedenfalls kann sich der Ringkörper 42 in der als Ringnut ausgestalteten Lageraufnahme 34 um eine Z-Achse des Kuppelkörpers 22 drehen.

Die Anhängekupplung 320 hat einen Sensormitnehmer 340, der nur einen einzigen Eingreifvorsprung 343 aufweist, der nach radial außen vorsteht. Es können auch mehrere, beispielsweise über einen Winkelabstand zueinander beabstandete Eingreifvorsprünge 343 vorgesehen sein, was jedoch zeichnerisch nicht dargestellt ist. Ansonsten entspricht die Anhängekupplung 320 der Anhängekupplung 20, das heißt dass der Sensormitnehmer 340 beispielsweise in einer als Ringnut ausgestalteten Lageraufnahme 34 des Kuppelkörpers 22 drehbar gelagert ist. Der Eingreifvorsprung 343 bildet ein Gegeneingreifelement 360.

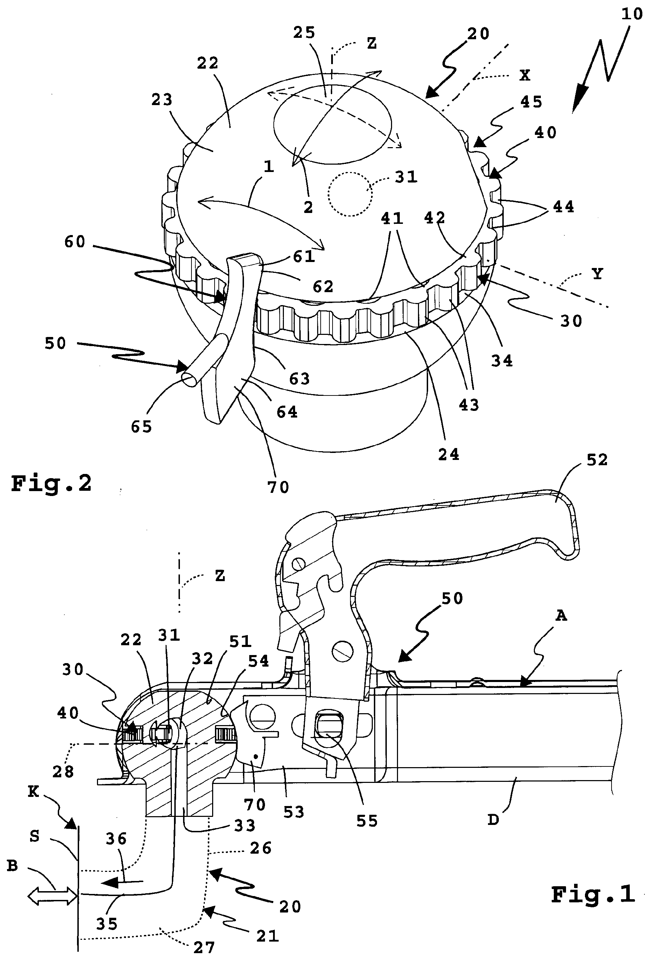

Die Zugkupplung 50, 150, 250, 350 kann sich in der Art einer Kugelgelenk-Pfanne kugelgelenkig am Kuppelkörper 22 drehen, unter anderem um die Z-Achse, aber auch um eine X-Achse und eine Y-Achse, wobei die Zugkupplungsaufnahme 51 sich an der Außenoberfläche 23 des Kuppelkörpers 22 drehend entlang bewegt, was durch Pfeile 1 und 2 in der Zeichnung, insbesondere Figur 2, dargestellt ist.

Der Sensormitnehmer 40, 340 ist zur Erfassung der Drehbewegung der Zugkupplung 50, 150, 250 und 350 um die Z-Achse vorgesehen. Bei den Drehbewegungen um die beiden anderen Achsen, die X-Achse und die Y-Achse hingegen sollte die Zugkupplung 50, 150, 250 und 350 möglichst keine Kraft auf den Sensormitnehmer 40, 340 ausüben, um diesen nicht zu beschädigen, keine Verklemmung zu bewirken oder dergleichen. Dennoch sollte jedoch die Zugkupplung 50, 150, 250 und 350 den Sensormitnehmer 40, 340 bezüglich der Z-Achse zuverlässig dreh-mitnehmen. Selbstverständlich ist das nachfolgend vorgestellte Drehmitnahme-Konzept auch bei anderen Drehwinkelerfassungen, auch mit linear verschieblichen Sensormitnehmern, vorteilhaft, beispielsweise um die X-Achse oder die Y-Achse, was jedoch in der Zeichnung nicht dargestellt ist.

An den Zugkupplungen 50, 150, 250 sind Gegeneingreifelemente 60, 160, 260 zum Eingriff mit der Eingreifelementanordnung 45 vorgesehen. Die Gegeneingreifelemente 60, 160 und 260 bilden Betätigungsmitnehmer 70, 170 und 270.

Die Zugkupplung 350 weist eine Eingreifelementanordnung 345 zum Eingriff mit dem Gegeneingreifelement 360 auf, das am Sensormitnehmer 340 der Anhängekupplung 320 vorgesehen ist. Die Eingreifelementanordnung 345 bildet einen Betätigungsmitnehmer 370.

Die Gegeneingreifelemente 60, 160, 260 sind drehfest an den Zugkupplungen 50, 150 und 250 angeordnet. Auch die Eingreifelementanordnung 345 ist drehfest bezüglich der Zugkupplung 350, an der sie angeordnet ist.

Die Gegeneingreifelemente 60 und 160 umfassen einen Eingreifkörper 61, der in eine der Eingreifvertiefungen 44 eingreifen kann.

Der Eingreifkörper 61 hat eine plattenförmige Gestalt. Der Eingreifkörper 61 ist zweckmäßigerweise ein seiner Stirnseite 62 mit einer konkaven Rundung ausgestattet, deren Radius einem Außenradius des Kuppelkörpers 22 entspricht, so dass die Stirnseite 62 einen der Außenoberfläche 23 des Kuppelkörpers 22 frei entlanggleiten kann. Dennoch kann eine die Stirnseite 62 umfassende Seite des Eingreifkörpers 61, die einen Eingreifvorsprung 63 bildet, in eine der Eingreifvertiefungen 44 drehschlüssig eingreifen, um den Sensormitnehmer 40 um die Z-Achse mitzunehmen bzw. zu drehen.

Zwischen der Stirnseite 62 und Seitenwänden 64 des Eingreifkörper 61 sind zweckmäßigerweise Rundungen vorgesehen, die ebenso wie die Rundungen am Übergang zwischen den Eingreifvorsprüngen 43 und den Eingreifvertiefungen 44 dazu beitragen, dass der Eingreifvorsprung 63 leicht in eine der Eingreifvertiefungen 44 hinein findet.

Da die Eingreifvertiefungen 44 sich um den gesamten oder nahezu den gesamten Außenumfang 24 des Kuppelkörpers 22 erstrecken, findet der Eingreifkörper 61 sozusagen automatisch eine der Eingreifvertiefungen 44, insbesondere dann, wenn sich der Sensormitnehmer 40 relativ leicht drehen kann. Wenn also der Eingreifkörper 61 in Richtung des Sensormitnehmers 40 bewegt wird, dreht er gegebenenfalls den Sensormitnehmer 40 ein kleines Stück weiter, bis er in eine der Eingreifvertiefungen 44 hinein findet.

Es versteht sich, dass nicht über den gesamten Außenumfang 24 Eingreifvertiefungen 44 vorgesehen sein müssen, sondern auch Umfangsabschnitte ohne Eingreifvertiefungen 44 am Sensormitnehmer 40 vorgesehen sein könnten.

Der Eingreifkörper 61 des Gegeneingreifelements 60 ist beispielsweise an oder bei der Verschlussbacke 53 angeordnet. beispielsweise ist an einer Rückseite des Eingreifkörper 61 ein Vorsprung 65 zur Montage an der Verschlussbacke 53 vorgesehen. Wenn also die Verschlussbacke 53 in Richtung des Kuppelkörpers 22 bewegt wird, wird der Eingreifkörper 61 bzw. das Gegeneingreifelement 60 oder der Betätigungsmitnehmer 70 in Eingriff mit dem Sensormitnehmer 40 gebracht.

Bei der Zugkupplung 150 ist ein Betätigungsmitnehmer 170 vorgesehen, der das Gegeneingreifelement 160 bildet. Der Betätigungsmitnehmer 170 umfasst einen Eingreif körper 161, der dem Eingreifkörper 61 gleicht, jedoch nicht an der Verschlussbacke 53 angeordnet ist. Vielmehr ist ein separates Stellelement 66 in Gestalt eines Schiebers vorgesehen, der seitlich an einem Gehäuse 56, das innenseitig die Zugkupplungsaufnahme 51 aufweist, beweglich gelagert ist. Das Stellelement 66 ist also außen am Gehäuse 56 angeordnet. Das Gegeneingreifelement 160 steht in die Zugkupplungsaufnahme 51 hinein vor den Schieber 66 vor.

Das Stellelement 66 weist eine plattenartige Gestalt auf. Das Stellelement 66 hat ein Langloch 67, das von einem Führungskörper 59, der am Gehäuse 56 ortsfest angeordnet ist, durchdrungen ist. Dadurch ist das Stellelement 66 längsverschieblich entlang der X-Achse bzw. eine Achse 57 des Gehäuses 56 verschieblich gelagert.

Nun könnte der Schieber 66 manuell betätigt werden, beispielsweise dann, wenn die Zugkupplung 150 die Schließstellung einnimmt. Mithilfe eines nicht dargestellten Betätigungskörpers, der beispielsweise vor den Schieber 66 vorsteht, oder durch Ergreifen des Schiebers 66, kann ein Bediener den Schieber 66 entlang der Achse 57 verstellen, um den Betätigungsmitnehmer 170 in Eingriff oder außer Eingriff mit dem Sensormitnehmer 40 zu bringen.

Bevorzugt ist jedoch eine Bewegungskopplung: Es ist nämlich eine Bewegungskopplung des Schiebers 66 und somit des Gegeneingreifelements 160 bzw. Betätigungsmitnehmers 170 mit einem Schließmechanismus der Zugkupplung 150 vorgesehen derart, dass ein Betätigungsvorsprung 58 des Schließmechanismus' der Zugkupplung 150, der nach außen vor das Gehäuse 56 vorsteht, in eine Mitnahmeöffnung 69 des Schiebers 66 eingreift, so dass bei einer beim Öffnen und Schließen des Schließmechanismus' erfolgenden Bewegung des Betätigungsvorsprungs 58 entlang der Achse 57 der Schieber 66 und somit auch der Betätigungsmitnehmer 170 mitgenommen wird. Wird also die Zugkupplung 150 geöffnet, wird zugleich der Schieber 66 betätigt und der Betätigungsmitnehmer 170 außer Eingriff mit dem Sensormitnehmer 40 gebracht.

Das Kupplungssystem 210 umfasst zwei Gegeneingreifelemente 260, 260', von denen eines beispielsweise an der Verschlussbacke 53 der Zugkupplung 250 angeordnet ist, während das andere Gegeneingreifelement 260' beispielsweise ortsfest an der Zugkupplungsaufnahme 51 angeordnet ist und dort nach radial innen zum Sensormitnehmer 40 vorsteht. Die Gegeneingreifelemente 260, 260' sind bezüglich der Zugkupplungsaufnahme drehwinkelversetzt, z.B. um 90 Grad oder mehr oder weniger.

Die beiden Gegeneingreifelemente 260, 260' sind baugleich und bilden Bestandteile eines Betätigungsmitnehmers 270 des Kupplungssystems 110. Die beiden Gegeneingreifelemente 260, 260' umfassen jeweils eine Eingreifvertiefung 71, die eine zu ihren freien Endbereichen 75 hin relativ breite Nut 72 umfasst. Mithin sind also Seitenwände 73 der Nut 72 an der jeweiligen Einführöffnung weiter voneinander beabstandet als ein Abstand zweier Eingreifvertiefungen 44 des Sensormitnehmers 40. Die Seitenwände 73 verlaufen beispielsweise konvex zueinander hin, wobei der Abstand zwischen den Seitenwänden 73 im mittleren Bereich 74 der Nut 72 am kleinsten ist, zu den freien Enden oder Endbereichen 75 hin weiter wird. Somit kann also ein jeweiliger Betätigungsmitnehmer 270 bzw. ein Gegeneingreifelement 260 und 260' um die X-Achse oder die Y-Achse schwenken, ohne den Sensormitnehmer 40 zu beschädigen.

Es kommt nur eine Innenseite der Nut 72 mit jeweils einem Eingreifvorsprung 43 in seitlichen Berührkontakt bzw. Drehmitnahme-Kontakt bezüglich der Z-Achse. Allerdings ist die Anordnung so getroffen, dass für jede Drehrichtung bezüglich der Z-Achse nur eine Seitenwand 73 einer Nut 72 eines jeweiligen Gegeneingreifelements 260 und 260' mit einer Seitenflanke 46 jeweils eines Eingreifvorsprungs 43 in Berührkontakt bzw. in Drehmitnahmekontakt ist. Aus diesem Grund ist für jede Drehrichtung ein Gegeneingreifelement 260 oder 260' vorgesehen.

Die dem Kuppelkörper 22 zugewandten Seiten der Gegeneingreifelemente 260 und 260', z.B. vorderen Stirnseiten 262 der Seitenwände 73, sind konkav, etwa entsprechend der Rundung des Kugelkopfes oder Kuppelkörpers 22. Diese Maßnahme trägt analog zur Rundung der Seitenwände 64 des Eingreifkörper 61 dazu bei, dass die Gegeneingreifelemente 260 und 260' in Eingriff mit dem Sensormitnehmer 40 bleiben.

Bei dem Kupplungssystem 310 ist die Reihenanordnung von Eingreifvertiefungen und Eingreifvorsprüngen an einem zweiteiligen Betätigungsmitnehmer 370, 370' vorgesehen, der an der Zugkupplung 350 angeordnet ist.

Beispielsweise sind an einer vorderen Innenseite 80 der Zugkupplungsaufnahme 51 eine Reihe von Eingreifvertiefungen 344 zwischen Zähnen 81 vorgesehen, die sich über einen Innenumfang der Zugkupplungsaufnahme 51 erstrecken. Die Zähne 81 gehören zu dem Betätigungsmitnehmer 370 und bilden einen Teil der Eingreifelementanordnung 345.

Weiterhin ist an der Verschlussbacke 353 eine Reihenanordnung von Zähnen 82 vorgesehen, zwischen denen ebenfalls Eingreifvertiefungen 344 ausgebildet sind. Die Verschlussbacke 353 bildet den Betätigungsmitnehmer 370' und einen weiteren Teil der Eingreifelementanordnung 345.

Wenn also die Zugkupplung 350 an der Anhängekupplung 320 angeordnet und geschlossen wird, greift der Eingreifvorsprung 343 in eine der Eingreifvertiefungen 344 ein und wird dementsprechend von der Zugkupplung 350 mitgenommen, wenn sich diese bezüglich der Anhängekupplung 320 um die Z-Achse dreht.

Die Zähne 81, 82 bzw. die Eingreifvertiefungen 344 müssen sich nicht über den gesamten Innenumfang 84 der Zugkupplungsaufnahme 51 erstrecken. Beispielsweise ist am Betätigungsmitnehmer 370 ein Abschnitt 83 ohne Eingreifvertiefungen 344 vorgesehen.

Es versteht sich, dass die Eingreifvertiefungen 344 auch in der Art der Nut 72 ausgestaltet sein können, d.h. Nuten umfassen, die zu ihrem mittleren Abschnitt hin schmaler sind, zu ihren freien Enden hin jedoch breiter werden, um eine Verspannung zwischen dem Betätigungsmitnehmer und dem Sensormitnehmer zu vermeiden.

Das erfindungsgemäße Konzept sieht vorteilhaft vor, dass in jeder Betätigungsrichtung des Sensormitnehmers, d.h. beispielsweise in jeder Drehrichtung um die Z- Achse, nur jeweils eine einzige Seitenwand oder Seitenflanke von Sensormitnehmer und Betätigungsmitnehmer in Kontakt sind, insbesondere ein Dreh-Formschluss vorhanden ist. Bei den Eingreifkörpern 61 und 161 der Betätigungsmitnehmer 70 und 170 sind dies beispielsweise die Seitenwände 64, die in eine der Eingreifvertiefungen 44 eingreifen und mit den jeweiligen Seitenflanken der Eingreifvertiefungen 44 in Drehmitnahme-Kontakt sind. Bei dem Kupplungssystem 210 ist nur jeweils eine Seitenwand 73 bzw. Innenseite einer Nut 72 in eine Berührkontakt mit einem zugeordneten Eingreifvorsprung 43, während die jeweils gegenüberliegende Seitenwand 73 von diesem Eingreifvorsprung 43 beabstandet ist. Dies trägt dazu bei, dass keine Verspannung zwischen Sensormitnehmer und Betätigungsmitnehmer auftritt.

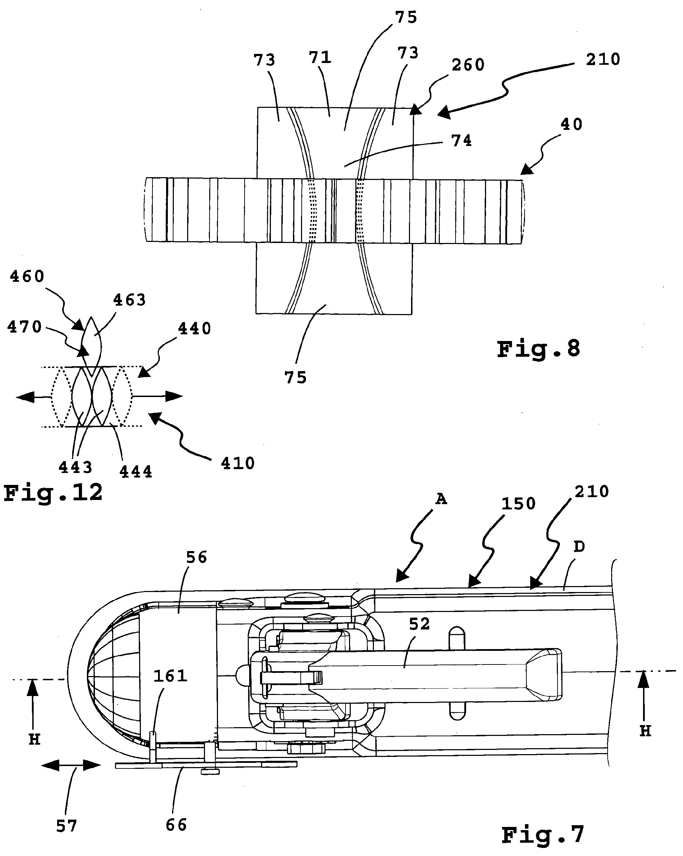

In Figur 12 ist ein weiteres exemplarisches Ausführungsbeispiel eines erfindungsgemäßen Kupplungssystems 410 dargestellt, bei dem ein angedeuteter, beispielsweise am Kuppelkörper 22 angeordneter, insbesondere ringförmig oder teilringförmiger Sensormitnehmer 440 Eingreifvorsprünge 443 aufweist, zwischen denen Eingreifvertiefungen 444 definiert sind. Das zugeordnete, beispielsweise an der Zugkupplung 50 angeordnete Gegeneingreifelement 460 eines Betätigungsmitnehmers 470 ist als Eingreifvorsprung 463 ausgestaltet, um zwischen die Eingreifvorsprünge 443, d.h. in die Eingreifvertiefungen 444, einzugreifen. Die Eingreifvorsprünge 443 bzw. der Eingreifvorsprung 463 haben jeweils eine sphärische Zweieck-Kontur, die mit dem Kugel-Außenumfang des Kuppelkörpers 22 vorzugsweise korrespondiert. Mithin sind also die freien Enden der Eingreifvorsprünge 443 bzw. 463 spitz auslaufend.

## Patentansprüche

1. Kupplungssystem (10; 110; 210; 310) umfassend
- eine Anhängekupplung (20; 320) für ein Kraftfahrzeug (K), insbesondere ein Personen-Kraftfahrzeug, zum Anhängen eines Anhängers (A) an das Kraftfahrzeug (K), wobei die Anhängekupplung (20; 320) einen an dem Kraftfahrzeug (K) befestigbaren Kuppelkörperträger (21) und einen an einem freien Endbereich des Kuppelkörperträgers (21) angeordneten, an seiner Außenoberfläche (23) zumindest abschnittsweise kugelförmigen Kuppelkörper (22) aufweist, und
- eine Anhänger-Zugkupplung (50; 150; 250; 350) eines Anhängers (A) mit einer auf den Kuppelkörper (22) aufsetzbaren Zugkupplungsaufnahme (51),
wobei der Kuppelkörper (22) für die Zugkupplungsaufnahme (51) einen diese drehbar lagernden Lagerkörper zum mehrachsig drehgelenkigen Schwenken relativ zu dem Kuppelkörperträger (21) bildet, wobei an dem Kuppelkörper (22) mindestens ein Sensormitnehmer (40; 340) beweglich, insbesondere drehbar, gelagert ist, der von der Anhänger-Zugkupplung (50; 150; 250; 350) bei einer Verdrehung relativ zum Kuppelkörper (22) mitnehmbar und relativ zu dem Kuppelkörper (22) verdrehbar und/oder verschiebbar ist, wobei der Sensormitnehmer (40; 340) einen Bestandteil einer Sensoranordnung (30; 330) zur Erfassung einer Winkelstellung der Anhänger-Zugkupplung (50; 150; 250; 350) relativ zu dem Kuppelkörperträger (21) bildet, wobei die Anhänger-Zugkupplung (50; 150; 250; 350) einen Betätigungsmitnehmer (70-370) zur Betätigung des Sensormitnehmers (40; 340) aufweist, wobei der Sensormitnehmer (40; 340) und der Betätigungsmitnehmer (70-370) eine am einen Teil von Sensormitnehmer (40; 340) und der Betätigungsmitnehmer (70-370) angeordneten Eingreifelementanordnung (45, 345) und mindestens ein am anderen Teil von Sensormitnehmer (40; 340) und Betätigungsmitnehmer (70-370) angeordnetes Gegeneingreifelement (60-360) aufweisen, wobei die Eingreifelementanordnung (45, 345) eine sich entlang eines Außenumfangs des Kuppelkörpers (22) oder eines Innenumfangs (84) der Zugkupplungsaufnahme (51) erstreckende Reihenanordnung von Eingreifvertiefungen (44; 344) oder Eingreifvorsprüngen zum Eingriff mit einem Eingreifvorsprung oder einer Eingreifvertiefung (44; 344) an dem mindestens einen Gegeneingreifelement (60-360) aufweisen, wenn der Kuppelkörper (22) in der Zugkupplungsaufnahme (51) aufgenommen ist, **dadurch gekennzeichnet, dass** mindestens ein Eingreifelement des Betätigungsmitnehmers (70-370) an der Anhänger-Zugkupplung (50; 150; 250; 350) verstellbar zwischen einer Eingreifstellung, in der das Eingreifelement in Eingriff mit dem Sensormitnehmer (40; 340) ist, und einer Außereingriffstellung, in das Eingreifelement außer Eingriff mit dem Sensormitnehmer (40; 340) ist, gelagert ist, wobei das Betätigungsmitnehmer-Eingreifelement zwischen der Eingreifstellung und der Außereingriffstellung beweglich ist, wenn der Kuppelkörper (22) in der Zugkupplungsaufnahme (51) aufgenommen ist.

2. Kupplungssystem nach Anspruch 1, **dadurch gekennzeichnet, dass** die Reihenanordnung der Eingreifvertiefungen (44; 344) oder der Eingreifvorsprünge und der zugeordnete Eingreifvorsprung oder die zugeordnete Eingreifvertiefung (44; 344) am anderen Teil so getroffen sind, dass nur jeweils Paar quer zur Betätigungsrichtung des Sensormitnehmers (40; 340) verlaufende Seitenflanken des Sensormitnehmers (40; 340) und des Betätigungsmitnehmers (70-370) in Berührkontakt ist.

3. Kupplungssystem nach Anspruch 1 oder 2, **dadurch gekennzeichnet, dass** die Anhänger-Zugkupplung (50; 150; 250; 350) relativ zum Kuppelkörper (22) um eine erste und mindestens eine zu der ersten Achse winkeligen zweite Achse verdrehbar ist und der mindestens eine Sensormitnehmer (40; 340) zur Erfassung der Relativ-Verdrehung um die erste Achse vorgesehen ist, und dass die Eingreifelementanordnung (45, 345) und das mindestens eine Gegeneingreifelement (60-360) einander zugeordnete Eingreifkonturen haben, die so beschaffen sind, dass eine Stellung des mindestens einen Sensormitnehmers (40; 340) bezüglich der ersten Achse bei einer Relativ-Verdrehung der Anhänger-Zugkupplung (50; 150; 250; 350) relativ zum Kuppelkörper (22) um ausschließlich die mindestens eine zweite Achse zumindest im wesentlichen unverändert bleibt und/oder bei einer Relativ-Verdrehung der Anhänger-Zugkupplung (50; 150; 250; 350) relativ zum Kuppelkörper (22), die eine Verdrehung um eine erste Bewegungskomponente um die erste Achse und eine Verdrehung um eine zweite Bewegungskomponente um die mindestens eine zweite Achse umfasst, der mindestens eine Sensormitnehmer (40; 340) um die erste Bewegungskomponente verstellt wird, während die zweite Bewegungskomponente keine oder nur eine unwesentliche Auswirkung auf den mindestens einen Sensormitnehmer (40; 340) hat.

4. Kupplungssystem nach einem der vorhergehenden Ansprüche, **dadurch gekennzeichnet, dass** der Sensormitnehmer (40; 340) ringförmig ist und drehbar am Kuppelkörper (22) gelagert ist und/oder dass der Sensormitnehmer (40; 340) oder der Betätigungsmitnehmer (70-370) eine Zahnanordnung umfasst, die nach radial außen vor den Kuppelkörper (22) bzw. nach radial innen in die Zugkupplungsaufnahme (51) hinein vorstehende Zähne oder Dorne umfasst.

5. Kupplungssystem nach einem der vorhergehenden Ansprüche, **dadurch gekennzeichnet, dass** mindestens ein Eingreifelement des Betätigungsmitnehmers (70-370) an einer Verschlussbacke (53, 353) der Anhänger-Zugkupplung (50; 150; 250; 350) zum Verschließen der Zugkupplung (50; 150; 250; 350) bezüglich der Anhängekupplung (20; 320) des Kraftfahrzeugs (K) angeordnet ist und/oder dass mindestens ein Eingreifelement des Betätigungsmitnehmers (70-370) einen an einer Verschlussbacke (53, 353) der Anhänger-Zugkupplung (50; 150; 250; 350) zum Verschließen der Zugkupplung (50; 150; 250; 350) bezüglich der Anhängekupplung (20; 320) des Kraftfahrzeugs (K) lösbar angeordneten Betätigungskörper, insbesondere einen Überzug für die Verschlussbacke (53, 353), umfasst.

6. Kupplungssystem nach einem der vorhergehenden Ansprüche, **dadurch gekennzeichnet, dass** mindestens ein Eingreifelement des Betätigungsmitnehmers (70-370) zum Verstellen zwischen der Eingreifstellung und der Außereingriffstellung an einem Stellelement, insbesondere einem Schieber, angeordnet ist, wobei das Stellelement unabhängig von einem Schließmechanismus beweglich ist oder mit einem Schließmechanismus der Anhänger-Zugkupplung (50; 150; 250; 350) bewegungsgekoppelt ist.

7. Kupplungssystem nach einem der vorhergehenden Ansprüche, **dadurch gekennzeichnet, dass** mindestens ein Eingreifelement des Betätigungsmitnehmers (70-370) an seiner dem Kuppelkörper (22) zugeordneten freien Seite eine runde, mit der kugelförmigen Außenkontur des Kuppelkörpers (22) korrespondierende Kontur aufweist, so dass der Betätigungsmitnehmer (70-370) entlang der Außenkontur des Kuppelkörpers (22) insbesondere quer dessen Äquatoriallinie frei schwenkbar ist und in formschlüssigem Eingriff mit dem jeweils zugeordneten Eingreifelement des Sensormitnehmers (40; 340) in Eingriff bleibt.

8. Kupplungssystem nach einem der vorhergehenden Ansprüche, **dadurch gekennzeichnet, dass** das mindestens eine Gegeneingreifelement (60-360) eine scheibenförmige oder plattenförmige Gestalt hat.

9. Kupplungssystem nach einem der vorhergehenden Ansprüche, **dadurch gekennzeichnet, dass** der Betätigungsmitnehmer (70-370) oder der Sensormitnehmer (40; 340) genau ein einziges Gegeneingreifelement (60-360) hat.

10. Kupplungssystem nach einem der vorhergehenden Ansprüche, **dadurch gekennzeichnet, dass** der Betätigungsmitnehmer (70-370) oder der Sensormitnehmer (40; 340) zwei Gegeneingreifelemente (60-360) hat, die in einem Winkelabstand zueinander an der Zugkupplungsaufnahme (51) angeordnet sind, wobei nur jeweils ein Gegeneingreifelement (60-360) des Betätigungsmitnehmers (70-370) in einer jeweiligen Betätigungsrichtung des Sensormitnehmers (40; 340) in Kontakt mit dem Sensormitnehmer (40; 340) ist.

11. Kupplungssystem nach einem der vorhergehenden Ansprüche, **dadurch gekennzeichnet, dass** mindestens eine Eingreifvertiefung (44; 344) des Betätigungsmitnehmers (70-370) oder des Sensormitnehmers (40; 340) eine Nut (72) aufweist, wobei die Nut (72) gekrümmt verlaufende Seitenwände (73) aufweist, die zu den jeweiligen freien Enden der Nut (72) hin weiter voneinander beabstandet sind als in einem mittleren Abschnitt der Nut (72).

12. Kupplungssystem nach einem der vorhergehenden Ansprüche, **dadurch gekennzeichnet, dass** die Eingreifelementanordnung (45, 345) und das mindestens eine Gegeneingreifelement (60-360) einander zugeordnete Eingreifkonturen aufweisen, von denen mindestens eine Eingreifkontur eine sphärische Zweieck-Kontur umfasst und/oder einen elliptischen Verlauf oder einen bogenförmigen Verlauf oder einen mit dem Krümmungsradius des Außenumfangs des Kuppelkörpers (22) oder dem Innenumfang der Zugkupplungsaufnahme korrespondierend gekrümmten Verlauf hat.

## Claims

1. Coupling system (10; 110; 210; 310) comprising
- a trailer coupling (20; 320) for a motor vehicle (K), in particular a car, for attaching a trailer (A) to the motor vehicle (K), wherein the trailer coupling (20; 320) has a coupling body member (21) which is attachable to the motor vehicle (K) and a coupling body (22) located at a free end section of the coupling body member (21) and at least partly spherical on its outer surface (23), and
- a trailer towing coupling (50; 150; 250; 350) of a trailer (A) with a towing coupling seating (51) which may be placed on the coupling body (22),
wherein the coupling body (22) forms for the towing coupling seating (51) a bearing body giving it rotatable support for multi-axis hinge-jointed swivelling relative to the coupling body member (21), wherein on the coupling body (22) at least one sensor driver (40; 340) is movably, in particular rotatably, mounted and may be driven by the trailer towing coupling (50; 150; 250; 350) during rotation relative to the coupling body (22) and is rotatable and/or movable relative to the coupling body (22), wherein the sensor driver (40; 340) forms part of a sensor array (30; 330) for detecting an angular position of the trailer towing coupling (50; 150; 250; 350) relative to the coupling body member (21), wherein the trailer towing coupling (50; 150; 250; 350) has an actuating driver (70-370) for actuating the sensor driver (40; 340), wherein the sensor driver (40; 340) and the actuating driver (70-370) have an engaging element assembly (45; 345) provided on one part of the sensor driver (40; 340) and the actuating driver (70-370), and at least one mating engaging element (60-360) provided on the other part of the sensor driver (40; 340) and the actuating driver (70-370), wherein the engaging element assembly (45; 345) has a row arrangement of engaging recesses (44; 344) or engaging projections extending along an outer periphery of the coupling body (22) or an inner periphery (84) of the towing coupling seating (51), for engaging with an engaging projection or an engaging recess (44; 344) on the mating engaging element or elements (60-360), if the coupling body (22) is held in the towing coupling seating (51), **characterised in that** at least one engaging element of the actuating driver (70-370) is mounted on the trailer towing coupling (50; 150; 250; 350), adjustable between an engaged position in which the engaging element is engaged with the sensor driver (40; 340), and a disengaged position in which the engaging element is disengaged from the sensor driver (40; 340), wherein the actuating driver-engaging element is movable between the engaged position and the disengaged position when the coupling body (22) is held in the towing coupling seating (51).

2. Coupling system according to claim 1, **characterised in that** the row arrangement of engaging recesses (44; 344) or engaging projections and the assigned engaging projection or engaging recess (44; 344) on the other part is made such that only each pair of side flanks of the sensor driver (40; 340) and the actuating driver (70-370) running transversely to the direction of actuation of the sensor driver (40; 340) is in physical contact.

3. Coupling system according to claim 1 or 2, **characterised in that** the trailer towing coupling (50; 150; 250; 350) is rotatable relative to the coupling body (22) around a first and at least one second axis at an angle to the first axis, and the sensor driver or drivers (40; 340) is or are provided to detect the relative rotation around the first axis, and that the engaging element assembly (45; 345) and the mating engaging element or elements (60-360) have engaging contours assigned to one another, which are so designed that a position of the sensor driver or drivers(40; 340) relative to the first axis remains at least substantially unchanged during a relative rotation of the trailer towing coupling (50; 150; 250; 350) relative to the coupling body (22) around solely the second axis or axes, and/or during a relative rotation of the trailer towing coupling (50; 150; 250; 350) relative to the coupling body (22) comprising a rotation around a first movement component around the first axis and a rotation around a second movement component around the second axis or axes, the sensor driver or drivers (40; 340) is or are moved around the first movement component, while the second movement component has no or only an insignificant effect on the sensor driver or drivers (40; 340).

4. Coupling system according to any of the preceding claims , **characterised in that** the sensor driver (40; 340) is annular and mounted rotatably on the coupling body (22), and/or that the sensor driver (40; 340) or the actuating driver (70-370) include a teeth arrangement which includes teeth or mandrels extending radially outwards from the coupling body (22) or radially inwards into the towing coupling seating (51).

5. Coupling system according to any of the preceding claims, **characterised in that** at least one engaging element of the actuating driver (70-370) is provided on a closing jaw (53; 353) of the trailer towing coupling (50; 150; 250; 350) for closing the trailer towing coupling (50; 150; 250; 350) relative to the trailer coupling (20; 320) of the motor vehicle (K), and/or that at least one engaging element of the actuating driver (70-370) includes an actuating body, in particular a cover for the closing jaw (53; 353), mounted releasably on a closing jaw (53; 353) of the trailer towing coupling (50; 150; 250; 350) for closing the trailer towing coupling (50; 150; 250; 350) relative to the trailer coupling (20; 320) of the motor vehicle (K).

6. Coupling system according to any of the preceding claims, **characterised in that** at least one engaging element of the actuating driver (70-370) is provided for adjustment between the engaged position and the disengaged position on an adjusting element, in particular a slide, wherein the adjusting element is movable independently of a closing mechanism or is movement-coupled to a closing mechanism of the trailer towing coupling (50; 150; 250; 350).

7. Coupling system according to any of the preceding claims, **characterised in that** at least one engaging element of the actuating driver (70-370) has on its free side assigned to the coupling body (22) a round contour corresponding to the spherical outer contour of the coupling body (22), so that the actuating driver (70-370) may be swivelled freely along the outer contour of the coupling body (22), in particular transversely to its equatorial line, and remains in positive engagement with the respectively assigned engaging element of the sensor driver (40; 340).

8. Coupling system according to any of the preceding claims, **characterised in that** the mating engaging element or elements (60-360) has or have a disc-shaped or plate-shaped form.

9. Coupling system according to any of the preceding claims, **characterised in that** the actuating driver (70-370) or the sensor driver (40; 340) has precisely one mating engaging element (60-360).

10. Coupling system according to any of the preceding claims, **characterised in that** the actuating driver (70-370) or the sensor driver (40; 340) has two mating engaging element (60-360) arranged with angular clearance from one another on the towing coupling seating (51), wherein in each case only one mating engaging element (60-360) of the actuating driver (70-370) is in contact with the sensor driver (40; 340) in each direction of actuation of the sensor driver (40; 340).

11. Coupling system according to any of the preceding claims, **characterised in that** at least one engaging recess (44; 344) of the actuating driver (70-370) or of the sensor driver (40; 340) has a groove (72), wherein the groove (72) has curved side walls (73) which are spaced further apart from one another at each free end of the groove (72) than in a central section of the groove (72).

12. Coupling system according to any of the preceding claims, **characterised in that** the engaging element assembly (45; 345) and the mating engaging element or elements (60-360) have engaging contours assigned to one another, of which at least one engaging contour has a spherical lune contour and/or an elliptical course or an arched course or a curved course corresponding to the radius of curvature of the outer periphery of the coupling body (22) or the inner periphery of the coupling seating.

## Revendications

1. Système d'attelage (5 ; 110 ; 210 ; 310) comprenant
- un attelage de remorque (20 ; 320) pour un véhicule automobile (K), en particulier un véhicule à moteur de transport de personnes, servant à atteler une remorque (A) au véhicule automobile (K), sachant que l'attelage de remorque (20 ; 320) présente un support de corps d'attelage (21) pouvant être fixé au niveau du véhicule automobile (K) et un corps d'attelage (22) disposé au niveau d'une zone d'extrémité libre du support de corps d'attelage (21), présentant au moins par endroits une forme sphérique au niveau de sa surface extérieure (23), et
- un attelage de traction de remorque (50; 150; 250; 350) d'une remorque (A) pourvu d'un logement d'attelage de traction (51) pouvant être placé sur le corps d'attelage (22),
sachant que le corps d'attelage (22) forme pour le logement d'attelage de traction (51) un corps de palier monté de manière à pouvoir tourner aux fins du pivotement par une articulation rotoïde multiaxial par rapport au support de corps d'attelage (21), sachant qu'au moins un entraîneur à capteur (40 ; 340) est monté de manière mobile, en particulier de manière à pouvoir tourner, au niveau du corps d'attelage (22), lequel peut être entraîné par l'attelage de traction de remorque (50 ; 150 ; 250 ; 350) lors d'une rotation par rapport au corps d'attelage (22) et qui peut être tournée et/ou déplacé par coulissement par rapport au corps d'attelage (22), sachant que l'entraîneur à capteur (40 ; 340) fait partie intégrante d'un ensemble de capteurs (30 ; 330) servant à détecter une position angulaire de l'attelage de traction de remorque (50 ; 150 ; 250 ; 350) par rapport au support de corps d'attelage (21), sachant que l'attelage de traction de remorque (50 ; 150 ; 250 ; 350) présente un entraîneur d'actionnement (70 - 370) servant à actionner l'entraîneur à capteur (40 ; 340), sachant que l'entraîneur à capteur (40 ; 340) et l'entraîneur d'actionnement (70 - 370) présentent un ensemble d'éléments de prise (45, 345) disposé au niveau d'une partie de l'entraîneur à capteur (40 ; 340) et de l'entraîneur d'actionnement (70 - 370) et au moins un élément de prise complémentaire (60 - 360) disposé au niveau de l'autre partie de l'entraîneur à capteur (40 ; 340) et de l'entraîneur d'actionnement (70 - 370), sachant que l'ensemble d'éléments de prise (45, 345) présente un ensemble de rangées, s'étendant le long d'une périphérie extérieure du corps d'attelage (22) ou d'une périphérie intérieure (84) du logement d'attelage de traction (51), de renfoncements de prise (44 ; 344) ou de parties faisant saillie de prise servant à venir en prise avec une partie faisant saillie de prise ou un renfoncement de prise (44 ; 344) au niveau de l'élément de prise complémentaire (60 - 360) au moins au nombre de un, lorsque le corps d'attelage (22) est logé dans le logement d'attelage de traction (51), **caractérisé en ce qu'**au moins un élément de prise de l'entraîneur d'actionnement (70 - 370) est monté au niveau de l'attelage de traction de remorque (50 ; 150 ; 250 ; 350) de manière à pouvoir être ajusté entre une position de prise, dans laquelle l'élément de prise est en prise avec l'entraîneur à capteur (40 ; 340), et une position hors prise, dans laquelle l'élément de prise n'est pas en prise avec l'entraîneur à capteur (40 ; 340), sachant que l'élément de prise d'entraîneur d'actionnement est mobile entre la position de prise et la position hors prise lorsque le corps d'attelage (22) est logé dans le logement d'attelage de traction (51).

2. Système d'attelage selon la revendication 1, **caractérisé en ce que** l'ensemble de rangées des renfoncements de prise (44 ; 344) ou des parties faisant saillie de prise et la partie faisant saillie de prise associée ou le renfoncement de prise (44 ; 344) associé au niveau de l'autre partie sont tels que seule respectivement une paire de flancs latéraux, s'étendant de manière transversale par rapport à la direction d'actionnement de l'entraîneur à capteur (40 ; 340), de l'entraîneur à capteur (40 ; 340) et de l'entraîneur d'actionnement (70 - 370) est en contact.

3. Système d'attelage selon la revendication 1 ou 2, **caractérisé en ce que** l'attelage de traction de remorque (50 ; 150 ; 250 ; 350) peut être tourné par rapport au corps d'attelage (22) autour d'un premier axe ou au moins d'un deuxième axe formant un angle par rapport au premier axe, et **en ce que** l'entraîneur à capteur (40 ; 340) au moins au nombre de un est prévu afin de détecter la rotation relative autour du premier axe, et **en ce que** l'ensemble d'éléments de prise (45 ; 345) et l'élément de prise complémentaire (60 - 360) au moins au nombre de un ont des contours de prise associés les uns aux autres, présentant des caractéristiques telles qu'une position de l'entraîneur à capteur (40 ; 340) au moins au nombre de un par rapport au premier axe reste au moins essentiellement inchangée lors d'une rotation relative de l'attelage de traction de remorque (50 ; 150 ; 250 ; 350) par rapport au corps d'attelage (22) autour exclusivement du deuxième axe au moins au nombre de un et/ou que, lors d'une rotation relative de l'attelage de traction de remorque (50 ; 150 ; 250 ; 350) par rapport au corps d'attelage (22), laquelle rotation comprend une rotation autour d'un premier composant de déplacement autour du premier axe et une rotation autour d'un deuxième composant de déplacement autour du deuxième axe au moins au nombre de un, l'entraîneur à capteur (40 ; 340) au moins au nombre de un est ajusté autour du premier composant de déplacement, tandis que le deuxième composant de déplacement n'a aucun impact voire seulement un impact négligeable sur l'entraîneur à capteur (40 ; 340) au moins au nombre de un.

4. Système d'attelage selon l'une quelconque des revendications précédentes, **caractérisé en ce que** l'entraîneur à capteur (40 ; 340) est de forme annulaire et est monté de manière à pouvoir tourner au niveau du corps d'attelage (22), et/ou **en ce que** l'entraîneur à capteur (40 ; 340) ou l'entraîneur d'actionnement (70 - 370) comprend un ensemble de dents, qui comprend des dents ou des mandrins faisant saillie vers l'extérieur radialement du corps d'attelage (22) ou vers l'intérieur radialement à l'intérieur du logement d'attelage de traction (51).

5. Système d'attelage selon l'une quelconque des revendications précédentes, **caractérisé en ce qu'**au moins un élément de prise de l'entraîneur d'actionnement (70 - 370) est disposé au niveau d'une mâchoire de verrouillage (53, 353) de l'attelage de traction de remorque (50 ; 150 ; 250 ; 350) servant à verrouiller l'attelage de traction (50 ; 150 ; 250 ; 350) par rapport à l'attelage de remorque (20 ; 320) du véhicule automobile (K), et/ou **en ce qu'**au moins un élément de prise de l'entraîneur d'actionnement (70 - 370) comprend un corps d'actionnement disposé de manière amovible au niveau d'une mâchoire de verrouillage (53, 353) de l'attelage de traction de remorque (50 ; 150 ; 250 ; 350) servant à verrouiller l'attelage de traction (50 ; 150 ; 250 ; 350) par rapport à l'attelage de remorque (20 ; 320) du véhicule automobile (K), en particulier un revêtement pour la mâchoire de verrouillage (53, 353).

6. Système de couplage selon l'une quelconque des revendications précédentes, **caractérisé en ce qu'**au moins un élément de prise de l'entraîneur d'actionnement (70 - 370) destiné à être ajusté entre la position de prise et la position hors prise est disposé au niveau d'un élément de réglage, en particulier au niveau d'un coulisseau, sachant que l'élément de réglage est mobile en fonction d'un mécanisme de fermeture ou est couplé en mouvement avec un mécanisme de fermeture de l'attelage de traction de remorque (50 ; 150 ; 250 ; 350).

7. Système d'attelage selon l'une quelconque des revendications précédentes, **caractérisé en ce qu'**au moins un élément de prise de l'entraîneur d'actionnement (70 - 370) présente, au niveau de son côté libre associé au corps d'attelage (22), un contour rond correspondant au contour extérieur de forme sphérique du corps d'attelage (22) de sorte que l'entraîneur d'actionnement (70 - 370) peut pivoter librement le long du contour extérieur du corps d'attelage (22) en particulier de manière transversale à la ligne équatoriale de ce dernier et reste en prise, par complémentarité de forme, avec l'élément de prise respectivement associé de l'entraîneur à capteur (40 ; 340).

8. Système d'attelage selon l'une quelconque des revendications précédentes, **caractérisé en ce que** l'élément de prise complémentaire (60 - 360) au moins au nombre de un a une configuration en forme de disque ou de plaque.

9. Système d'attelage selon l'une quelconque des revendications précédentes, **caractérisé en ce que** l'entraîneur d'actionnement (70 - 370) ou l'entraîneur à capteur (40 ; 340) a précisément un unique élément de prise complémentaire (60 - 360).

10. Système d'attelage selon l'une quelconque des revendications précédentes, **caractérisé en ce que** l'entraîneur d'actionnement (70 - 370) ou l'entraîneur à capteur (40 ; 340) a deux éléments de prise complémentaires (60 - 360), qui sont disposés selon une distance angulaire l'un par rapport à l'autre au niveau du logement d'attelage de traction (51), sachant que seul respectivement un élément de prise complémentaire (60 - 360) de l'entraîneur d'actionnement (70 - 370) est en contact avec l'entraîneur à capteur (40 ; 340) dans une direction d'actionnement respective de l'entraîneur à capteur (40 ; 340).

11. Système d'attelage selon l'une quelconque des revendications précédentes, **caractérisé en ce qu'**au moins un renfoncement de prise (44 ; 344) de l'entraîneur d'actionnement (70 - 370) ou de l'entraîneur à capteur (40 ; 340) présente une rainure (72), sachant que la rainure (72) présente des parois latérales (73) s'étendant de manière incurvée, qui sont davantage tenues à distance les unes des autres en direction des extrémités respectives libres de la rainure (72) que dans une section centrale de la rainure (72).

12. Système d'attelage selon l'une quelconque des revendications précédentes, **caractérisé en ce que** l'ensemble d'éléments de prise (45, 345) et l'élément de prise complémentaire (60 - 360) au moins au nombre de un présentent des contours de prise associés les uns aux autres, parmi lesquels au moins un contour de prise comprend un contour à deux angles sphérique, et/ou a une extension elliptique ou une extension en forme d'arc ou une extension incurvée correspondant au rayon d'incurvation de la périphérie extérieure du corps d'attelage (22) ou à la périphérie intérieure du logement d'attelage de traction.
